Europäisches Patentamt

European Patent Office

Office européen des brevets

(19)

(11) Veröffentlichungsnummer : **0 059 917**
**B1**

(12)                    EUROPÄISCHE PATENTSCHRIFT

(45) Veröffentlichungstag der Patentschrift :
28.11.84

(51) Int. Cl.³ : **A 01 K 13/00**

(21) Anmeldenummer : **82101554.2**

(22) Anmeldetag : **01.03.82**

(54) Schutzhülle für Beine und Gelenke von Huftieren.

(30) Priorität : 09.03.81 CH 1638/81
22.06.81 CH 4106/81

(43) Veröffentlichungstag der Anmeldung :
15.09.82 Patentblatt 82/37

(45) Bekanntmachung des Hinweises auf die Patenterteilung : 28.11.84 Patentblatt 84/48

(84) Benannte Vertragsstaaten :
AT BE CH DE FR GB IT LI LU NL SE

(56) Entgegenhaltungen :
EP-A- 0 029 739
DE-U- 7 807 150
US-A- 3 209 517
US-A- 3 913 302

(73) Patentinhaber : TEMOVA ETABLISSEMENT
Landstrasse 140
FL-9494 Schaan (LI)

(72) Erfinder : Benckhuijsen, Jan Gerrit
Landstrasse 140
FL-9494 Schaan (LI)

(74) Vertreter : Büchel, Kurt F., Dr.
Austrasse 4
FL-9490 Vaduz (LI)

## Beschreibung

Die Erfindung betrifft eine manschettenartige Schutzhülle für Beine und Gelenke von Huftieren, insbesondere von Pferden, versehen mit Bändern zur Befestigung der Schutzhülle an den betreffenden Tieren.

Für Pferdebeine vorgesehene Bandagen und Gamaschen dienen dem Schutz der Beine vor äusseren Verletzungen. Daneben benützt man Bandagen, um Verbände oder Umschläge zu befestigen (vgl. z. B. DE-U-7 807 150). Bandagen bestehen aus 6-8 cm breiten Leinen- oder Wollbandstreifen, deren Wickelbereich sich vom Vorderfusswurzelgelenk bzw. vom Sprunggelenk abwärts über das ganze Fesselgelenk bis zur Hufkrone erstrecken kann. Der Nutzwert derartiger Bandagen hängt allerdings stark vom zeitaufwendigen, fachgerechten Umwickeln ab und sie besitzen für sich keine Heilfunktion. Ausserdem sind Einschnürungen und Störungen des Blutkreislaufes fast unvermeidlich. Die Alternative zu Bandagen sind Schnallgamaschen, die zwar für sich ebenfalls keine Heilfunktion besitzen und Umschläge weniger wirksam haltern, gegenüber Bandagen jedoch schneller anzulegen sind und z. B. den Blutkreislauf nicht beeinträchtigen. Schnallgamaschen aus Leder, Wolltuch oder Kunststoff bilden eine mittels Riemen- und Schnallenverschluss zusammengehaltene einlagige Hülle um die betreffende Beinpartie. Die Verwendung derartiger Gamaschen ist auf den unteren Beinbereich zwischen Hufkrone und unteren Ansatz des Vorderfusswurzelgelenkes bzw. Sprunggelenkes beschränkt.

Die Erfindung hat sich zur Aufgabe gestellt, eine Schutzhülle für die Beine von Huftieren, insbesondere Pferde, zu schaffen, die in Art bekannter Gamaschen um die betreffende Beinpartie gelegt wird und ausser einer Schonfunktion gegen äussere Verletzungen auch therapeutische Wirkungen in den sich zwischen Hufkrone bis oberhalb des Vorderfusswurzelgelenkes bzw. Sprunggelenkes erstreckenden Beinpartien an Vorder- und Hinterbeinen ausübt.

Diese Aufgaben werden erfindungsgemäss gelöst eine Schutzhülle der obengenannten Art, die gekennzeichnet ist

— durch eine Ausbildung der Schutzhülle als therapeutisches Mittel zur Behandlung von Erkrankungen der umhüllten Stellen mittels elektrostatisch erzeugter Ladungen auf der Haut,

— welche Schutzhülle um die Beine und Gelenke herumlegbar und dann formbeständig ist, eine Innenwandung und eine Aussenwandung aus dem gleichen gestrickten Textilmaterial aufweist und zwischen den beiden Wandungen ein Polster aus Schaumstoff besitzt,

— durch ein Textilmaterial, das aus zur Erzeugung von Reibungselektrizität geeigneten, unhygroskopischen Fasern aus Kunststoff besteht und 50 bis 125 Maschen pro cm$^2$ besitzt,

— und durch eine mit Innen- und Aussenwand verbundene Schaumstoffplatte als Polster mit offenen und luftdurchlässigen Poren.

In der nachstehenden Beschreibung verwendete spezielle Bezeichnungen sind dem Buch « Der Reiterpass » von H.D. Donner und M. Llewellyn, Jahr-Verlag KG, Hamburg, entnommen.

Die Erfindung ist im folgenden für einige Ausführungsbeispiele anhand der beiliegenden Zeichnungen näher erläutert. Es zeigen :

Figur 1 vier unterschiedliche Ausführungsformen von Schutzhüllen in vereinfachter Darstellung mit den ihnen zugeordneten Beinbereichen,

Figuren 2a und b Draufsichten auf die vereinfacht dargestellte Innenseite (Fig. 2b) und (nach oben geklappt) die Aussenseite (Fig. 2a) einer Fusshülle für das Vorderbein ;

Figur 3 einen Schnitt entlang der Linie A-A von Fig. 2a ;

Figuren 4a und b einen Schnitt entsprechend Fig. 3 für ein weiteres Ausführungsbeispiel der Schutzhülle nach Fig. 2a :

Figuren 5a und b Draufsichten auf die vereinfacht dargestellte Aussenseite (Fig. 5a) und Innenseite (Fig. 5b) einer Gelenkhülle für das Fusswurzelgelenk ;

Figur 6 einen vereinfachten Umriss der Gelenkhülle von Fig. 5, in Blickrichtung B von Fig. 5a gesehen ;

Figur 7 eine Draufsicht auf das Ausgangsmaterial zur Herstellung der Polsterung der Gelenkhülle von Fig. 5 bzw. 6 ;

Figuren 8a und b Draufsichten auf die vereinfacht dargestellte Aussenseite (Fig. 8a) und Innenseite (Fig. 8b) einer Gelenkhülle für das Sprunggelenk.

Figuren 9a und b Draufsichten auf die Aussen- bzw. Innenseite einer vereinfacht ausgebildeten Schutzhülle in schematischer Darstellung ;

Figur 10 einen Schnitt längs der Ebene B-B in Fig. 9a durch die Schutzhülle ;

Figur 11 eine schematische Darstellung der am linken Vorderbein angelegten Schutzhülle nach Fig. 9a und b.

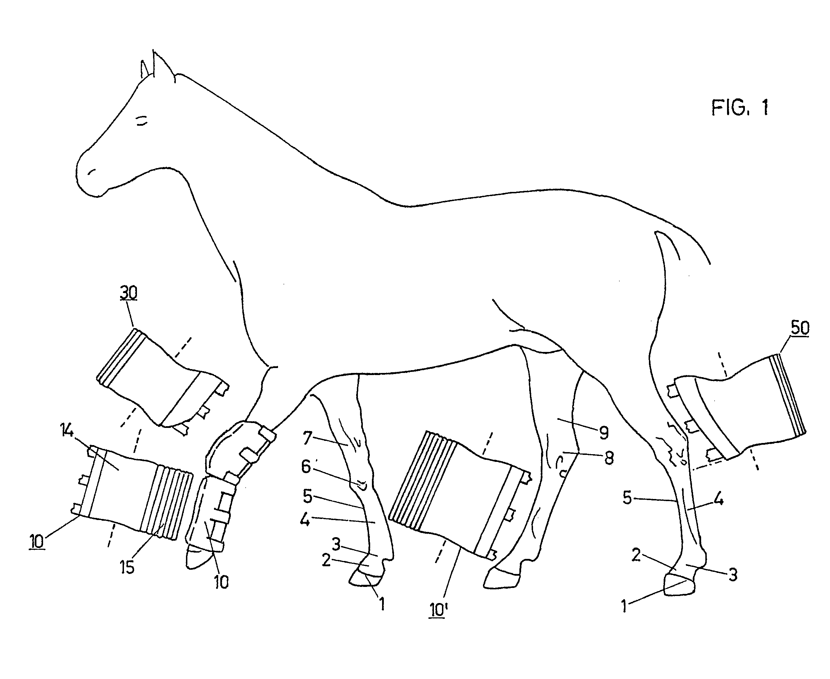

Bezugnehmend auf Fig. 1 seien zunächst einige Einzelheiten und Bezeichnungen bei Pferdebeinen angegeben. An den Vorder- und Hinterbeinen erkennt man jeweils die Hufkrone 1, die Fessel 2, das Fesselgelenk mit Fesselballen 3 und den Mittelfuss 4 mit stirnseitigem Schienbein 5. Ferner weist das Vorderbein das Fusswurzelgelenk 6 und den Unterarm 7, das Hinterbein das Sprunggelenk 8 und den Unterschenkel 9 auf. Weil diese Anatomie für Einhufer und der Familie der Unpaarhufer gemeinsam ist, kann die erfindungsgemässe Schutzhülle ausser für Pferde auch für eine Vielzahl von Tieren, insbesondere von Zootieren, verwendet werden.

Unter Schutzhüllen im erfindungsgemässen Sinn fallen vorwiegend vier Ausbildungsformen, die in Fig. 1 schematisch dargestellt sind. Insbesondere verdeutlicht die Zeichnung den jeder Ausbildungsform zugeordneten Beinbereich. Die ausgebreitet sowie angelegt dargestellte Fusshülle 10 ist vorgesehen zur Umhüllung des gesamten Mittelfusses 4 sowie des Fesselgelenkes 3 und der Fessel 2 des Vorderbeins. In entsprechender Weise umgibt die Fusshülle 10' Mittelfuss 4, Fesselgelenk 3 und Fessel 2 des Hinterbeins. Wie ersichtlich, unterscheiden sich die formgleichen Fusshüllen 10, 10' des Vorder- und Hinterfusses lediglich in ihren Abmessungen. Ausserdem sind zwei dem Fusswurzelgelenk 6 und Sprunggelenk 8 zugeordnete Gelenkhüllen 30 bzw. 50 vorgesehen. Die Gelenkhülle 30 umgibt das gesamte Fusswurzelgelenk 6, inden sie sich von unterhalb des Gelenkansatzes bis in den Unterarmbereich 7 des Vorderbeins erstreckt. Andererseits erstreckt sich die Gelenkhülle 50 von unterhalb des Sprunggelenkes 8 bis in den Unterschenkelbereich 9 unter Umhüllung des gesamten Sprunggelenkes 8. Fig. 1 zeigt jeweils die Innenseiten der ausgebreiteten Hüllen 10, 10', 30, 50, wobei die gestrichelten Linien die Richtungen andeuten die nach dem sachgerechten Anlegen der Schutzhüllen zu den Achslinien der betreffenden Beinabschnitte parallel verlaufen. Aus noch zu erläuternden Gründen sitzen die Hüllen dann sachgerecht, wenn die Schienbeine 5 bzw. die Stirnkanten der Fusswurzel- und Sprunggelenke 6, 8 längs den gestrichelten Richtungen den Hülleninnenseiten anliegen.

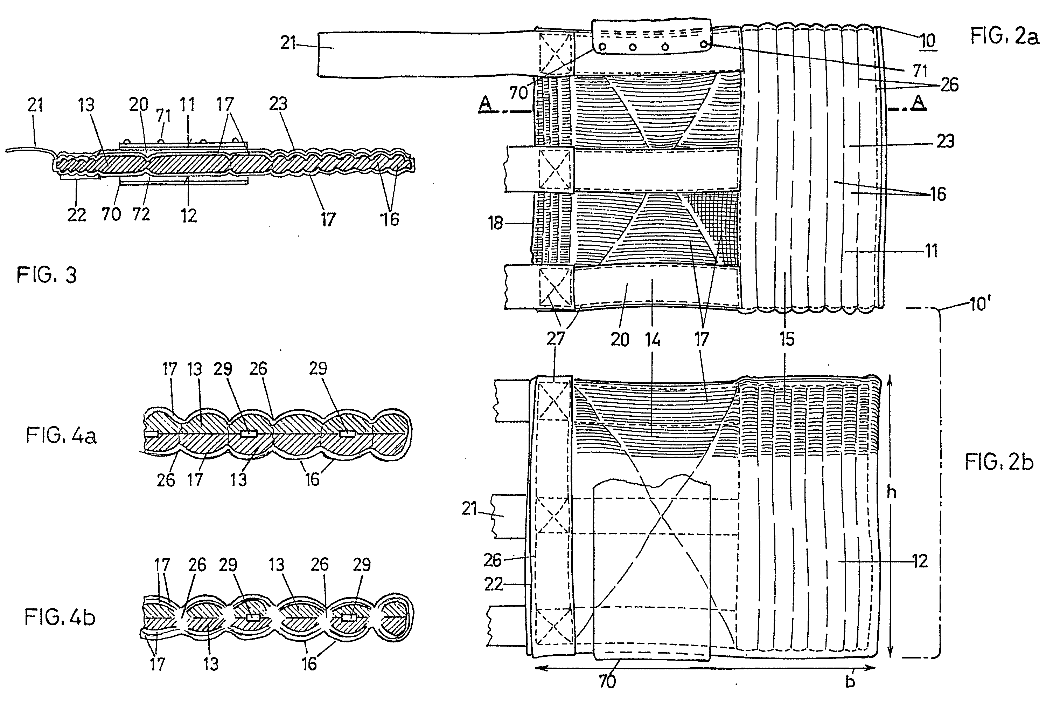

Wie aus dem Ausführungsbeispiel für die Fusshülle 10 gemäss Fig. 2, 3 ersichtlich ist, weisen die Fusshülle 10 sowie die in gestrichelter Kontur angedeutete Fusshülle 10' des Hinterbeins, für welche die nachfolgenden Ausführungen infolge gleichen Aufbaus sinngemäss zutreffen, rechteckige Gestalt auf. Die Höhe h entspricht dem Abstand Fessel 2 bis zum Fusswurzelgelenk 6, während die geringügig grössere Breite b den Umfang des Fussballenbereichs 3 übertrifft. Gemäss Fig. 3 enthält die Fusshülle 10 zwischen Aussenseite 114 und Innenseite 12 eine durch den ganzen Hüllenbereich sich erstreckende Polsterung 13. Die Fusshülle 10 ist wegen der überschüssigen Breite an unterschiedliche Fussstärken anpassfähig und dementsprechend in einen Anlagebereich 14 und Einrollbereich 15 unterteilt. Der Einrollbereich 15 besitzt eine aus parallelen Rundwülsten 16 gebildete Struktur zum passgerechten Einrollen. Wie Fig. 3 zeigt, besteht die Aussenseite 11 und die Innenseite 12 aus einem Textilmaterial 17, das die Flachseiten, Längs- und Querkanten der Polsterung 13 umschliesst.

Die Fixierung der Hülle 10 in eingerolltem Zustand am Fuss erfolgt hier mittels selbstklebender Haft- und Trennverschlussmittel. Diese bestehen aus quer über die Aussenseite 11 im Anlagebereich 14 verlaufende Haft- und Klebestreifen 20 und hierzu komplementär ausgebildete Bänder 21, die in Querrichtung über den Seitenrand 18 des Anlagebereichs 14 vorstehen und ebenfalls auf der Aussenseite 11 befestigt sind. Eine weiteres Paar Haft- und Trennverschlussmittel besteht aus einem längs des Seitenrandes 18 auf der Innenseite 12 verlaufenden Haft- und Klebestreifen 22 und einem Gegenstück 23 aus komplementärem Material, das den Einrollbereich 15 auf der Aussenseite 11 abdeckt.

In eingerolltem Zustand überlappt der Anlagebereich 14 mit seinem Seitenrand 18 den Einrollbereich 15, wobei der Streifen 22 und das Gegenstück 23 einander aufliegen und einen ersten Verschluss bilden. Ausserdem werden die über den Seitenrand 18 vorstehenden Bänder 21 über den Einrollbereich 15 herumgeführt und bilden mit den Querstreifen 20 einen weiteren Verschluss, sodass ein stabiler Sitz gewährleistet ist. Wie ersichtlich ist, ergibt sich im eingerollten Hüllenzustand eine durchgehende Innenbekleidung aus dem genannten und der Haut anliegenden Textil 17. Die bevorzugte Anlage besteht hierbei darin, dass der flächige Anlagebereich 14 in der Mitte über die Schienbeinpartie verläuft. In dieser Stellung enden ferner die Bänder 21 abstreifgesichert auf der lateralen Fusseite (Fig. 1).

Wie bereits die angelegten Hüllen 10, 30 (Fig. 1) des linken Vorderbeins verdeutlichen, ergeben die Hüllen 10, 30 den herkömmlichen Schutz gegen äussere Verletzungen, wobei sich der Schutzbereich von oberhalb der Fusswurzel 6 bis zur Hufkrone 1 erstreckt. Erfindungswesentlich ist, dass die Hüllen 10, 10' 30, 50 ausserdem eine zusätzliche Ausbildung als therapeutisches Behandlungsmittel für Beinerkrankungen besitzen, womit ausser einer Schutzfunktion eine Heilfunktion der Hüllen erzielt wird. Das Zustandekommen dieses Heileffekts durch die Fusshülle 10 hängt wesentlich ab von der stofflichen und strukturellen Beschaffenheit des Textils 17, der Beschaffenheit der Polsterung 13, sowie der gegenseitigen Anordnung von Textil 17 und Polsterung 13 in Bezug auf den Krankheitsherd.

Aus der Humanmedizin sind zur Erzeugung von Reibungselektrizität geeignete Kunstfasertextilien bekannt, die gegenüber der Haut eine elektrostatische Aufladung und ein hieraus resultierendes Wärmegefühl hervorrufen, weshalb derartige Textilien in Gesundheitswäsche Anwendung finden.

Wird die vorstehend beschriebene Schutzhülle 10 mit einem derartigen Textil 17 bestimmter Struktur ausgestattet und einem und Gelenk- und Sehnenscheidenentzündung leidendem Pferd angelegt, so klingen die Beschwerden überraschenderweise in kürzester Zeit ab. Dieser Heilungsprozess ist offenbar nicht allein der Wärmeentwicklung in der Umgebung des Entzündungsherdes zuzuschreiben. Es muss vielmehr angenommen werden, dass die elektrostatischen Ladungen auf der Haut selbst, sowie die hohen elektrostatischen Spannungen den Heilungsprozess fördern. Möglicherweise bewirken derartige Textilien bei Pferden neuartige, bisher nicht bekannte Heileffekte. Es wurd auch ermittelt, dass das Textil 17 allein den Heileffekt nicht ausmacht, sondern nur in Anwesenheit einer geeigneten Polsterung 13 eintritt und ferner besonders wirksam ist, wenn nicht nur die Innenseite 12 sondern auch die Aussenseite 11 aus diesem Textil 17 besteht.

Bei dem genannten Textil 17 handelt es sich um ein Kunstfasergestrick, für das sich parafinierte Polyvinylchloridfasern geeignet erwiesen haben, wobei den Polyvinylchloridfasern zur Erhöhung der Reissfestigkeit ein Anteil von 10-15 % Acrylfasern beigefügt sein kann. Es können jedoch auch andere zur Erzeugung von Reibungselektrizität geeignete synthetische Fasern zur Herstellung der gestrickten Textils 17 angewandt werden. Für den Heileffekt ist es wesentlich, dass die Ladung auf der Haut und die entstehende elektrostatische Spannung einen möglichst hohen und dauernd aufrecht erhaltenen Wert besitzt. Das erforderliche Textil sollte infolgedessen einerseits möglichst dicht sein zwecks Erzeugung hoher elektrostatischer Werte und andererseits genügende Maschenweite besitzen zwecks leichtem Verdunsten der Hautfeuchtigekeit, welche infolge der Wärmeentwicklung entstehen kann und die Ladung beeinträchtigen würde. Es wurde ermittelt, das diese Erfordernisse durch Feinrippgestricke und Interlockgestricke der nachfolgenden Kenndaten am besten erfüllt werden. Das Feinrippgestrick wurde aus der vorstehend angegebenen Kunstfaser mit 2,5 bis 4 Denier auf einer STIBBE-Rundstrickmaschine bei Verarbeitung mit 10 Nadeln auf 2 cm erzeugt. Die Stichstahl betrug 21 Stiche/2 cm Länge und 15 Stiche/2 cm Breite; die Maschenzahl 78/cm² und das Gewicht 315 g/m².

Allgemein wurden als wirksamste Stichzahlenbereiche 18-25 bzw. 12-20 Stiche pro 2 cm Länge bzw. Breite und 310-325 g/m² als bevorzugter Gewichtsbereich für das Feinrippgestrick ermittelt. Zu seiner Herstellung kommen auch andere Rundstrickmaschinen oder Flachstrickmaschinen in Frage.

Bei einem auf Interlockbasis und einer Verarbeitung mit 16 Nadeln, auf 2 cm erzeugten Interlockgestrick betragen die für den Anwendungszweck wirksamsten Kenndaten : Garngewicht 40 000-50 000 m Länge/kg, Stichzahl 20-30 Stiche/2 cm in Länge und Breite, Flächengewicht 150-300 g/m². Typisch sind z. B. für ein 40 000 m/kg Garn : 26(25) Stiche auf 2 cm Länge (Breite) und 260 g/m² Gewicht ; für ein 50 000 m/kg Garn : 25(24) Stiche auf 2 cm Länge (Breite) und 200 g/m² Gewicht. In Fig. 2a ist das Textil 17 beispielsweise liniert als Feinrippgestrick und schraffiert als Interlockgestrick schematisch dargestellt worden.

Wie vorstehend angegeben, ist ausser dem Textil 17 eine bestimmte Beschaffenheit der Polsterung 13 erforderlich, damit die Fusshülle 10 therapeutische Wirksamkeit besitzt. Die Hauptforderung besteht darin, dass die Polsterung 13 ungehindert Luft passieren lässt. Diese Luftdurchlässigkeit ist notwendig, damit von der Haut verdunstete feuchte Luft die Fusshülle 10 von der Innenseite 12 zur Aussenseite 11 durchdringen kann. Ferner soll die Polsterung eine elastische Formfestigkeit besitzen, die einen allseitigen Anpressdruck des Textils 17 gegen die Haut gewährleistet. Diese Forderungen werden allgemein mit einem Schaumkörper der Gruppe Polyurethan-Schaum als Polsterung 13 erreicht, der infolge offener Poren luftdurchlässig ist, die erwünschte elastische Formfestigkeit aufweist und Feuchtigkeit durchlässt. Der Schaumkörper der praktisch erprobten Fusshülle 10 besitzt z. B. 2 cm Dicke und ein Gewicht von 40 kg/m³.

Selbstverständlich ist auch eine Luftdurchlässigkeit der Aussenschicht 11 erforderlich. Wie jedoch die praktische Erprobung erwiesen hat, steigt die therapeutische Wirksamkeit der Fusshülle 10, wenn anstelle eines beliebigen luftdurchlässigen Materials, z. B. Leinen, ebenfalls das Textil 17 der vorstehend angegebenen Beschaffenheit die Aussenschicht 11 der Hülle 10 bildet. Vorteilhaft ist ferner, wenn zwei gegenseitig bereichsweise verschiebliche Lagen des Textils 17 die Schaumkörper-Polsterung 13 allseits umgeben. Die hierbei auftretenden resultierenden elektrostatischen Spannungen gegen die Haut übersteigen 30 kV.

Die Herstellung der Fusshüllen 10 bzw. 10' erfolgt zweckmässig in folgenden Schritten : Zusammenlocken ein- oder doppellagiger Textilhüllen auf der Lockmaschine, Einfügen des Schaumkörpers durch eine offengelassene Hüllenseite und Zusammennähen unter Aufnähen der Haft- und Trennverschlussmittel 20-23 auf einer Ledernähmaschine. In Fig. 2 sind beispielsweise Einnähnähte 26 und Aufnähnähte 27 gestrichelt angedeutet.

Wie bei Betrachtung der Fig. 1 bis 3 ersichtlich ist, verlangt die Erstellung der vorliegenden Schutzhülle beispielsweise aus einem doppellagigen Textil der obengenannten Art für Aussenseite 11 und die Innenseite 12, sowie einer Schaumstoffpolsterung im Inneren und dem Anbringen der Haft- und Trennverschlussmittel eine Vielzahl von Nähten, also einen erheblichen Arbeitsaufwand. Eine wesentliche Reduzierung desselben ist möglich geworden durch die überraschende Feststellung, dass ein Textilmaterial der oben beschriebenen Art auch mit dem aus der Lederindustrie bekannten Verfahren der Hochfrequenz-Verschweissung verarbeitet werden kann. Dabei werden anstelle des Nähvorgangs jeweils die zu verbindenden Materialien zwischen keilförmigen Metall-Elektroden zusammengepresst und durch Zuführung entsprechender Hochfrequenzenergie miteinander verschweisst. Eine Voraussetzung hierzu ist aber, dass für die Herstellung der vorliegenden Schutzhülle nicht nur das so verschweissbare Textilmaterial verwendet wird, sondern auch ein geeigneter Schaum, der einerseits die oben beschriebenen strukturellen Eigenschaften besitzt, andererseits aber auch mit Hochfrequenz verschweissbar sein muss. Dies ist für die angegebene Polsterung 13 aus Polyurethan-Schaum bisher mit Schwierigkeiten verbunden, weshalb hierfür ein Polyvinylchlorid-Schaum verwendet wird, der die erforderliche Formbeständigkeit, sowie offene Poren und ausreichende Luftdurchlässigkeit besitzt. Dieser Polyvinylchlorid-Schaum kann mittels Hochfrequenz verschweisst und dementsprechend mit dem oben beschriebenen Textilmaterial zusammen verarbeitet werden. Hierbei hat sich ein Frequenzbereich von etwa 20 MHz als geeignet erwiesen, wie er auch in den bekannten Hochfrequenz-Schweisspressen der Lederindustrie angewendet wird. Bei der Herstellung der beschriebenen Schutzhülle gemäss diesem Hochfrequenz-Schweissverfahren wird jeweils die ein- oder zweilagige Textilschicht der Innenseite auf die untere Elektrode der betreffenden Schweissmaschine gelegt, hierauf die Schaumstoffplatte mit einer Gesamtdicke von beispielsweise 10-20 mm und hierauf die ein- oder zweilagige Textilbahn 17 der Aussenseite aufgebracht, wobei natürlich diese drei Bestandteile bereits die Gestalt gemäss den Fig. 2 besitzen. Längs der zu verschweissenden Linien, also dort wo bisher die Nähte 26, 27 vorgesehen sind, weist mindestens die eine Elektrode, beispielsweise die obere, entsprechende Rippen mit keilformigen Kanten auf, zwischen denen dann beim Zusammenpressen der Elektroden die sämtlichen Bestandteile der Schutzhülle aufeinander gedrückt werden. Durch kurzzeitige Zuführung der Hochfrequenzenergie schmelzen längs der zusammengedrückten Linien die Materialien des Textils 17 und der Posterung 13 und werden längs dieser Schweissnaht unlöslich miteinander verbunden. Mit dem Hochfrequenz-Schweisserfahren können auch die Klebestreifen 20 bzw. Bänder 21 auf der Aussenseite befestigt werden, wobei dieselben nicht unbedingt aus einem, zur Hochfrequenz-Verschweissung geeigneten Material bestehen müssen, sondern in einem getrennten Arbeitsgang auf eine schweissfähige Unterlage werden können, woraufhin diese Unterlage mit dem Textilmaterial der Aussenseite der Schutzhülle verschweisst wird, was bei geeigneter Anordnung auch zusammen mit der Verschweissung der übrigen Bestandteile der Schutzhülle erfolgen kann.

Bei den in den Fig. 2 und 3 dargestellten Fusshüllen für das Vorderbein hat sich in der Praxis gezeigt, dass es vorteilhaft sein kann, die aus parallelen Rundwülsten 16 gebildete Struktur im Einrollbereich 15 durch in die Rundwülste eingelegte elastische Stäbe 29 zu verstärken, wie sie in Fig. 2a angedeutet sind. In einer bevorzugsten Ausführungsform wird dabei, wie der Querschnitt gemäss Fig. 4a zeigt, ein aus zwei dünneren Schaumstoffbahnen bestehendes Schaumpolster 13 vorgesehen, zwischen denen sich an den gewünschten Stellen der vorgesehenen Rundwülste 16 die elastischen Stäbe 29 befinden. Nach Bildung der Rundwülste 16 mittels der durchgehenden Nähte 26 sind die Stäbe 29 in ihrer Lage innerhalb der einzelnen Rundwülste 16 genügend fixiert ; falls erwünscht, können die einzelnen Stäbe 29 auch auf der einen oder beiden Schaumstoffbahnen geklebt oder anderweitig befestigt werden. Erfolgt bei einem Ausführungsbeispiel gemäss Fig. 4a die Bildung der Rundwülste 16 nicht durch eine durchgehende Naht sondern nach dem oben beschriebenen Verfahren der Hochfrequenz-Verschweissung, so ergibt sich, wie in Fig. 4b angedeutet, längs der Schweissstellen 26 zwischen den benachbarten Rundwülsten jeweils eine mehr oder weniger homogene Zone aus geschmolzenem PVC-Material, wobei ebenfalls gewährleistet ist, dass die längs der Mittelachse der Rundwülste 16 sich erstreckenden Stäbe 29 praktisch unverrückbar festgehalten sind.

Bei den in Fig. 2a, 2b dargestellten Fusshüllen 10 für das Vorderbein und den entsprechenden Füsshüllen 10' für das Hinterbein ist es zweckmässig, dass insbesondere der untere, der Hufkrone 1 zugekehrte Rand verstärkt wird durch eine Einfassung mit einem Band aus dauerhaftem Material, beispielsweise aus Leder. Dieses Band kann nachträglich an der Schutzhülle festgenäht werden und schützt dieselbe vor dem Verschleiss an dieser Stelle. Wird anstelle von Leder beispielsweise ein Band aus zähem Polyvinylchlorid-Material verwendet, etwa aus handelsüblichen Kunstleder, dann besteht die Möglichkeit, diesen Schutzrand mittels Hochfrequenz-Verschweissung nach dem oben beschriebenen Verfahren entweder nachträglich an die Schutzhülle anzuschweissen oder bereits bei deren Herstellung im gleichen Arbeitsgang anzubringen. Falls erwünscht, kann auch der obere Rand der Schutzhüllen 10 bzw. 10' mit einem solchen Verstärkungsband versehen werden.

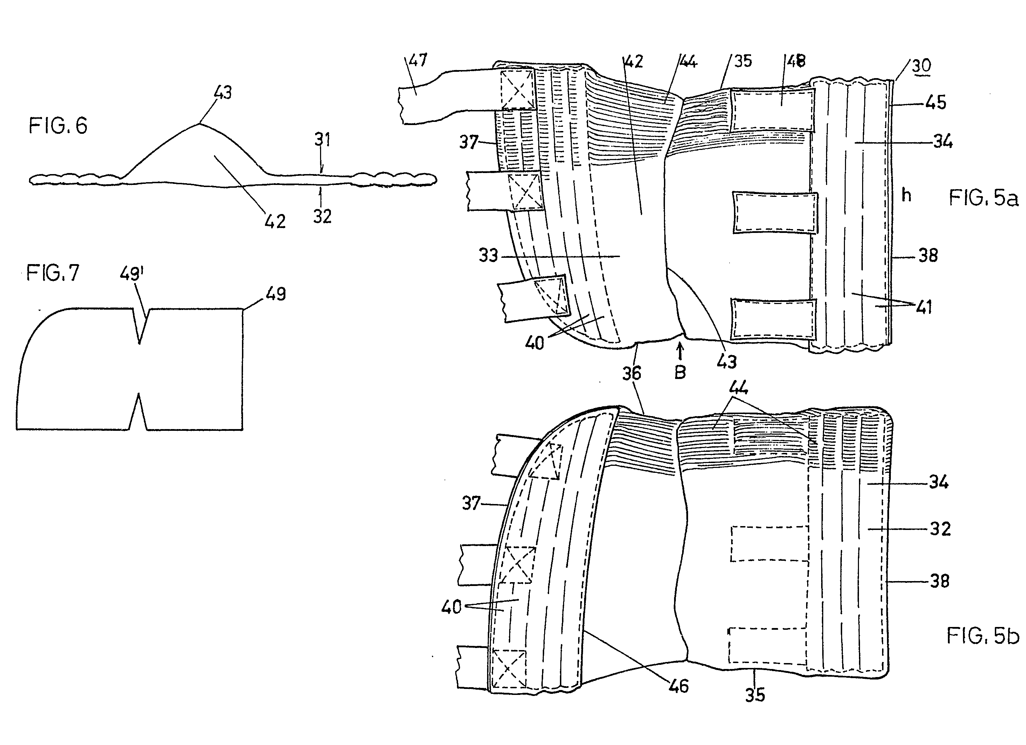

Die Ausführungsbeispiele gemäss Fig. 5-8 der Gelenkhüllen 30, 50 für das Fusswurzelgelenk 6 bzw. Sprunggelenk 8 besitzen jeweils eine Textilauskleidung und Polsterung, die von identischer stofflicher Beschaffenheit sind wie das Textil 17 und die Polsterung 13 der Fusshülle 10, sodass von einer wiederholenden Erläuterung deren Eigenschaften und Zwecke abgesehen werden kann.

Die Gelenkhülle 30 für das Fusswurzelgelenk 6 besitzt die aus Fig. 5a, bzw. 5b ersichtliche Aussenseite 31 und Innenseite 32. Die Höhe h der Gelenkhülle 30 ist zweckmässig um einen Betrag grösser als der Abstand zwischen unterem und oberen Absatz der Fusswurzel 6. Ebenfalls sind die obere und untere Breite um einen Betrag grösser als der Fusswurzelumfang, womit die Hülle 30 in einen Anlagebereich 33 und Einrollbereich 34 unterteilt ist. Im angelegten Zustand umfasst die Hülle 30 mit ihrem breiteren Oberrand 35 den Unterarm 7 und mit ihrem kürzeren Unterrand 36 den Mittelfuss 4, wobei der Einrollbereich 34 unter den Seitenrand 37 des Anlagebereichs 33 zu liegen kommt. Dieser Seitenrand 37 besitzt eine vom Oberrand 35 nach einwärts zum Unterrand 36 verlaufende Rundung, während hier der Seitenrand 38 des Einrollbereichs 34 senkrecht zu den Rändern 35, 36 verläuft. Beidseits der Seitenränder 37, 38 erstrecken sich nach einwärts gerichtete Rundwülste 40, 41. Im Anlagebereich 33 ist eine nach aussen gerichtete Wölbung 42 ausgebildet, die vom Ober- und Unterrand 35, 36 geneigt ansteigt und im mittleren bis unteren Anlagebereich 33 einen dachähnlichen First 43 bildet. In Blickrichtung B von Fig. 5a gesehen, erkennt man aus der äusseren Kontur der Hülle gemäss Fig. 6 angenähert die Höhe der Wölbung 42. Die dargestellte Hülle 30 ist für das linke Fusswurzelgelenk 6 vorgesehen, die entsprechende Hülle für das rechte Gelenk besitzt spiegelsymmetrische Gestalt. Allgemein erweist sich mit der vorstehenden Formgebung die Hülle 30 für dasjenige linke oder rechte Fusswurzelgelenk 6 passgerecht, für welches der Einrollbereich 34 quer zu liegen kommt.

Die Gelenkhülle 30 ist auf der Aussenseite 31, Innenseite 32 und entlang der Ränder 35-38 mit einem vorzugsweise doppellagigen Textil 44 der beschriebenen Beschaffenheit versehen und verfügt über die oben angegebene Schaumkörper-Polsterung. Die selbstklebenden Haft- und Trennmittel bestehen aus dem Klebestreifen 45, welcher den Einrollbereich 34 auf der Aussenseite 31 bedeckt und dessem Gegenstück 46, das sich auf der Innenseite 32 entlang dem gerundeten Seitenrand 37 des Anlagebereiches 33 erstreckt. Den auf die Aussenseite 31 aufgenähten und über den gerundeten Seitenrand 37 austretenden Bändern 47 sind die querliegenden Klebestreifen 48 auf der Aussenseite 31 zugeordnet.

Zur Herstellung der Gelenkhülle 30 erwies sich die Verwendung einer Schaumkörperscheibe 49 von 2 cm Dicke und der in Fig. 7 gezeichneten Gestalt zweckmässig. Zunächst werden die beiden Ausschnitte 49' zusammengelockt, was die erwünschte Wölbung 42 in der Scheibe 49 erzeugt. Die anschliessenden Herstellungsschritte entsprechen der oben erläuterten Herstellung der Fusshülle 10.

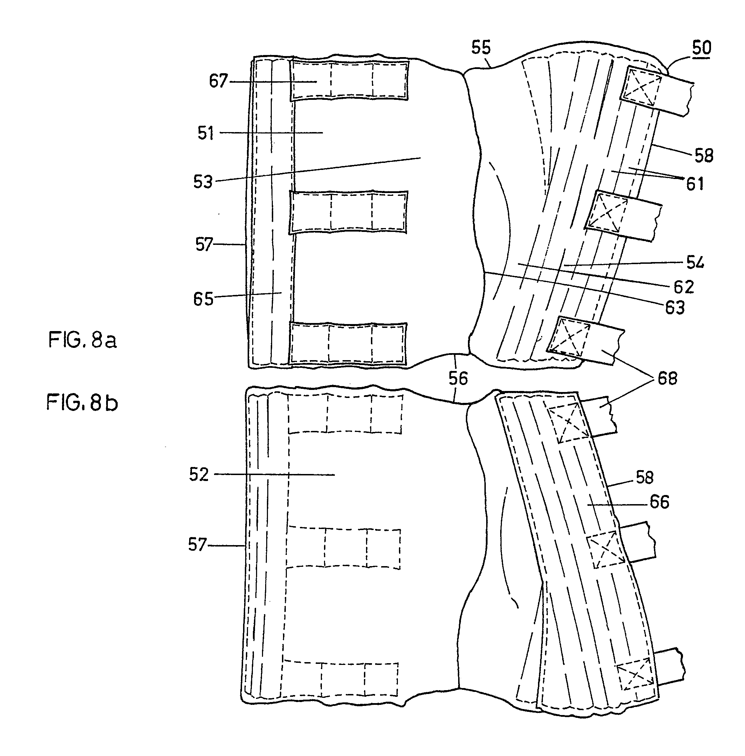

Die Gelenkhülle 50 gemäss Fig. 8 für das Sprunggelenk 8 besitzt im wesentlichen eine der Gelenkhülle 30 entsprechende Form. Die Abweichungen ergeben sich lediglich aus der nach rückwärts gerichteten Position des Sprunggelenkes 8, weshalb die vorstehenden Ausführungen zur Gelenkhülle 30 sinngemäss auf die Gelenkhülle 50 übertragbar sind. Die Gelenkhülle 50 verfügt über die Aussen- und Innenseite 51, 52, den Anlagebereich 53, Einrollbereich 54, den breiteren Oberrand 55 und kürzeren Unterrand 56, den Seitenrand 57 des Anlagebereiches 53, der zwischen Ober- und Unterrand 55, 56 vertikal steht sowie den Seitenrand 58 des Einrollbereichs 54, der vom Oberrand 55 abgeschrägt zum Unterrand 56 verläuft. Der Einrollbereich 54 ist durch parallele Rundwülste 61 strukturiert. Die Wölbung 62 des Anlagebereichs 53 ist stärker ausgeprägt als die Wölbung 42 der Gelenkhülle 30 und weist einen dachartigen bis gerundeten First 63 auf. In angelegtem Zustand liegt der Einrollbereich 54 an der Innenseite des Gelenks 8, weshalb die dargestellte Gelenkhülle 50 für das linke Sprunggelenk vorgesehen ist. Hierbei überlappt der Einrollbereich 54 den Anlagebereich 53 an dessen Seitenrand 57. Der Streifen 65 auf der Aussenseite 51 steht in Klebeverbindung mit dem Gegenstück 66 auf der Innenseite ; die querliegenden Klebestreifen 67 befestigen die über den Seitenrand 58 des Einrollbereichs 54 austretenden Bänder 68.

Es sei darauf hingewiesen, dass anstelle oder zusätzlich zu den selbstklebenden Haft- und Trennverschlüssen der Hüllen 10, 10', 30, 50 auch Riemen- und Schnallverschlüsse vorhanden sein können. Die Gelenkhülle 50 wird allseitig wie die Gelenkhülle 30 mit dem erläuterten Textil umgeben und verfügt über die Schaumkörper-Polsterung 49.

An den Gelenkhüllen 30, 50 der vorstehenden Gestalt und Materialbeschaffenheit können die bereits an den Fusshüllen 10, 10' festgestellten therapeutischen Effekte nachgewiesen werden und sie eignen sich vorteilhaft zur Behandlung von Erkrankungen des Fusswurzel- und Sprunggelenkbereichs. Wie oben erwähnt ist von Bedeutung, dass auch die Aussenseite der oben beschriebenen Schutzhüllen aus dem Textil 17 besteht.

Bei den Gelenkhüllen 30 und 50 kann es, ebenso wie oben bei den Fusshüllen 10 bzw. 10' beschrieben, zweckmässig sein, einzelne Partien auf der Aussenseite oder die Kanten mit Leder oder ähnlichem festen Material zu verkleiden, damit Beschädigungen beim Gebrauch vermieden werden. Falls erwünscht, kann auch bei der Gelenkhülle 30 gemäss Fig. 5a und 5b der Rand 38 nicht geradlinig verlaufen sondern abgerundet werden um eine bessere Passform zu erzielen.

Auch die oben beschriebene Gelenkhüllen 30 und 50 weisen eine Vielzahl von Nähten auf und können, bei geeigneter Gestaltung der Elektroden mit dem Verfahren der Hochfrequenz-Verschweissung längs dieser Nähte hergestellt werden, wobei natürlich ein Schaumkörper verwendet werden sollte, der nach dem gleichen Verfahren längs der Nahtstellen verschweisst werden kann, wie dies oben beschrieben ist.

Bei der Behandlung von Erkrankungen der oben angegebenen Art bei Pferden mittels der beschriebenen therapeutischen Schutzhüllen hat es sich als vorteilhaft erwiesen, in manchen Fällen unmittelbar vor dem Beginn dieser Behandlung einen Kühlumschlag auf die erkrankten Stellen der Beine aufzubringen. Um eine solche vorausgehende Kältebehandlung zu erleichtern, kann bei den oben beschriebenen Schutzhüllen, wie dies beispielsweise bei der Fusshülle 10 in den Fig. 2a, 2b und 3 angedeutet ist, eine Tasche 72 vorgesehen werden, die sich längs der Innenseite 12 der Fusshülle erstreckt. Sie kann beispielsweise aus einer dünnen Plastikfolie 70 bestehen, die um den unteren Rand der Fusshülle 10 umgeschlagen und auf deren Aussenseite 11 mittels der Druckknöpfe 71 befestigt ist, sich also leicht abnehmen lässt. In diese, durch die Plastikbahn 70 geschaffene Tasche 72 kann dann ein biegsames, allseits geschlossenes Kissen eingeschoben werden, das beispielsweise mit kaltem Wasser, Eis oder einer anderen Kühlflüssigkeit gefüllt ist. Da eine solche Kältebehandlung nur kurz dauern soll, kann das Kissen mit der Kühlflüssigkeit am Ende der Behandlung aus dieser inneren Tasche 72 weggenommen und die Plastikbahn 70 nach unten aus der Fusshülle 10 herausgezogen und von ihr abgeknöpft werden. Dann beginnt unmittelbar nach der Kältebehandlung die therapeutische elektrostatische Wärmebehandlung durch die Fusshülle 10, was sich als besonders wirksam gezeigt hat.

Die für therapeutische Zwecke bestimmten Schutzhüllen 10 bzw. 30 bzw. 50 wie sie anhand der Fig. 2 bis 8 oben beschrieben sind, wurden auf ihre Wirksamkeit von zwei Fachtierärzten erprobt, wobei aber die Geheimhaltung der Bauweise und der verwendeten Materialien aufrecht erhalten worden ist. Die Schutzhüllen wurden dabei als VIBROSTATIC-Bandagen bezeichnet, entsprechend der registrierten Schutzmarke VIBROSTATIC der Anmelderin. Die nachstehend angegebenen Beispiele I und II entsprechen den Gutachten aufgrund der obengenannten beiden Erprobungen.

Beispiel I

(Dr. G. G., Facharzt für Pferde, Kronberg/BRD)

« In der Zeit vom 21.1.80 bis 28.2.80 testeten wir die VIBROSTATIC Wärmebandagen an 12 Pferden.

Die Bandagen liessen sich bei allen Pferden problemlos anbringen und wurden auch bei längerem Tragen gut geduldet. Nur bei einem Pferd musste zusätzlich ein Fress-Schutz angelegt werden, um ein Abknabbern der Bandagen zu verhindern.

Wir legten die Bandagen im Bereich der Vorderextremität zwischen Huf- und Carpalgelenk und an der Hinterextremität zwischen Huf- und Sprunggelenk an.

Die besten Erfolge sahen wir bei akuten Gelenks- und Sehnenscheidenergüssen auf der Basis einer Distorsion oder von Ueberanstrengung. Hie führte das Anlegen der Bandagen ohne Zusatzmedikation innerhalb kürzester Zeit zum Abklingen der Beschwerden.

Bei Krankheitsprozessen, dei schon länger bestanden (Carpitis nach Chip-Fraktur, Sehnenscheidengalle) wurde zusätzlich ein durchblutungsförderndes Medikament eingerieben. Auch hier kam es dann innerhalb von 8-18 Tagen zur vollständigen Remission der Schwellung und zum Abklingen der Lahmheit. Aufgrund der innerhalb kurzer Zeit gemachten guten Erfahrungen mit der VIBROSTATIC-Wärmebandage möchten wir sie in Zukunft häufig in Klinik und Praxis anwenden. »

Beispiel II

(Dr. B. H., Fachtierazt für Pferde, Darmstadt/BRD)

« Seit wenigen Wochen habe ich die neuentwickelten VIBROSTATIC-Bandagen in verschiedenen Grössen und Ausführungen zur Erprobung am Pferd in versuchsweiser Anwendung.

Folgende Anwendungsgebiete kommen beim Pferd in Betracht :

1. Tendinitis acuta und chronica
2. Periositis im Bereich des Metacarpus
3. Nach Distorsionen im Zehengelenksbereich

4. Arthritis acuta
5. Gallenbildung und nach Punktion von Gallen zur Verhinderung von Rezidiven
6. Gliedmassenschwellung nach Trauma, auch Gliedmassenschwellung stauungsbedingt.

Zur Zeit habe ich ca. 10 Bandagen in Erprobung bei den oben genannten Indikationen.

Nach ersten Erfahrungen kann ich sagen, dass sich die Bandagen in Grösse und Art der Befestigung sehr gut für den Gliedmassenbereich beim Pferd eignen. Nach einer Tragezeit der Bandage von 7-14 Tagen konnte in allen Fällen eine Abschwellung bzw. ein Rückgang der Entzündungserscheinungen erreicht werden. Rezidive nach Punktion von Gallen oder nach Punktion von Seromen konnten verhindert werden. Ich halte die VIROSTRATIC-Bandagen für die oben angeführten Indikationsbereiche am Pferd für geeignet. »

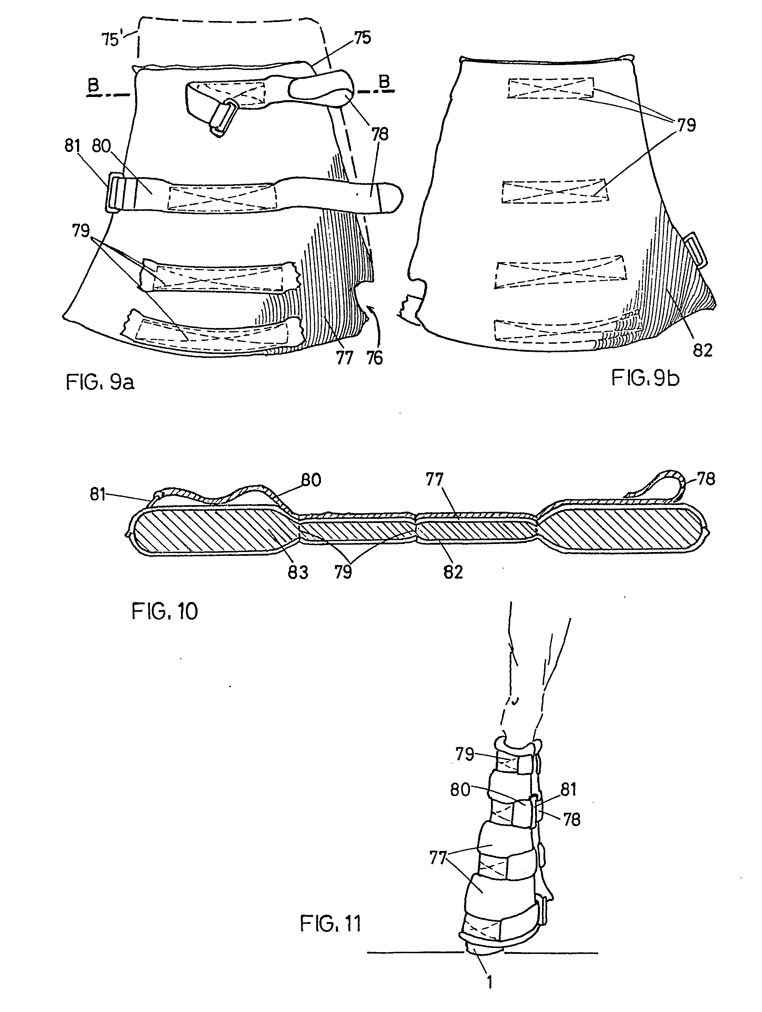

Die oben beschriebene Schutzhüllen für therapeutische Zwecke sind dazu bestimmt, eine Heilung bei bereits erkrankten Pferden zu ermöglichen oder zu beschleunigen. Darüber hinaus können diese Schutzhüllen aber natürlich auch zur Vorbeugung von Erkrankungen besonders der Vorder- und Hinterfüsse bei Pferden verwendet werden, beispielsweise dann wenn die Tiere einem längeren Transport ausgesetzt sind, wobei erfahrungsgemäss besonders leicht Verletzungen oder rheumatische Erkrankungen auftreten können. Besonders für den letztgenannten Verwendungszweck werden die beschriebenen Schutzhüllen als sogenannte Transportbandagen bezeichnet und haben sich bewährt. Eine gegenüber den Fusshüllen 10 bzw. 10' vereinfachte Ausführungsform solcher Fusshülle 75, 75' zeigen die Fig. 9a + b und 10, bzw. 11. Die Fusshülle 75 ist in der in Fig. 9a dargestellten Ausführungsform für das rechte Vorderbein vorgesehen und zur Umhüllung sowohl des gesamten Mittelfusses 4, wie auch des Fesselgelenkes 3 und der Fessel 2 bestimmt, als auch für die fast vollständige Umhüllung des Hufes, sodass, wie Fig. 11 zeigt, die Hufkrone 1 vollständig bedeckt ist. Zu diesem Zwecke ist der untere Rand der Fusshülle 75, wie in Fig. 9a angedeutet, im Mittelteil verlängert und besitzt, wenn die Fusshülle 75 ausgebreitet ist, eine abgerundete Gestalt. Ferner ist eine Ausnehmung 76 vorgesehen, womit eine bessere Passform erzielt wird. Da bei dieser vereinfacht ausgeführten Fusshülle 75 auf einen Einrollbereich wie bei der Fusshülle 10 verzichtet wird, ist eine abgeschrägte bzw. abgerundete Gestalt der seitlichen Ränder zweckmässig, etwa entsprechend der Darstellung in Fig. 9a. Auf der Aussenseite 77 der Fusshülle 75 sind Haft- bzw. Klebestreifen 78 vorgesehen und mittels durchgehender Vernähungen 79 an der Fusshülle 75 befestigt, zusammen mit entsprechenden Befestigungsbändern 80, die am vorderen Ende eine Schnalle 81 besitzen können. Die aus Fig. 9b ersichtliche Innenseite 82 ist, bis auf die durchgehenden Nähte 79 für die Bänder 78, 80 ohne besondere Struktur. Die Fusshülle 75 besteht aus einem inneren Schaumkörper 83, wie aus dem Querschnitt der Fig. 10 ersichtlich ist, in einer die Aussenseite 77 und die Innenseite 82 bildenden Textilmaterial, das dem Textil 17 entspricht, wie es weiter oben für die Schutzhülle 10, 10' ausführlich beschrieben worden ist. Auch bei der vereinfachten Ausführungsform der Schutzhülle 75 ist es zweckmässig, jeweils eine doppelte Schicht aus dem Textilmaterial für die Aussenseite 77 und die Innenseite 82 vorzusehen, um durch verstärkte gegenseitige Reibung die Erzeugung der erwünschten elektrostatischen Ladungen zu verbessern.

Im Vergleich zu der Fusshülle 75 für das linke bzw. rechte Vorderbein ist die Fusshülle 75' für das linke bzw. rechte Hinterbein etwas länger, wie dies in Fig. 9a angedeutet ist. Im Übrigen entspricht die Ausführung aber der Fusshülle 75.

Falls erwünscht, besteht natürlich die Möglichkeit, auch bei dieser vereinfachten Transportbandage 75 bzw. 75' eine mechanische Versteifung in Form von elastischen Stäben vorzusehen, ähnlich wie in Fig. 4a bei der Fusshülle 10 beschrieben. Auch kann anstelle der angegebenen Vernähung 79 eine Hochfrequenz-Verschweissung vorgesehen werden, wie sie weiter oben ausführlich beschrieben worden ist, wobei dann eine hierfür geeignete Schaumstoffbahn 83 verwendet wird.

Die vereinfachte Schutzhülle 75 bzw. 75' hat sich in der Praxis als sogenannte Transportbandage bewährt, besonders weil sie kein geschultes Personal zum Anlegen voraussetzt, wie dies bisher bei gewickelten Bandagen erforderlich ist. Auch hat sich gezeigt, dass keine unerwünschten Einschnürungen und dardurch verursachte Durchblutungsstörungen auftreten können, was bei gewickelten Bandagen nur dann gewährleistet ist, wenn dieselben fachgerecht angebracht sind. Die therapeutische Wirkung der Fusshüllen dieser Bauform gewährleistet, dass auch bei längerem Transport der Pferde während ungünstiger Witterung keine Erkrankungen der unteren Extremitäten der Pferde auftreten können.

**Ansprüche**

1. Manschettenartige Schutzhülle für Beine und Gelenke von Huftieren, insbesondere Pferden, versehen mit Bändern (21, 47, 68, 80) zur Befestigung der Schutzhülle an den betreffenden Tieren, gekennzeichnet
— durch eine Ausbildung der Schutzhülle (10, 10', 30, 50, 75, 75') als therapeutisches Mittel zur Behandlung von Erkrankungen der umhüllten Stellen mittels elektrostatisch erzeugter Ladungen auf der Haut,
— welche Schutzhülle um die Beine und Gelenke herumlegbar und dann formbeständig ist, eine Innenwandung (12, 32, 52, 82) und eine Aussenwandung (11, 31, 51, 77) aus dem gleichen gestrickten Textilmaterial (17, 44) aufweist und zwischen den beiden Wandungen ein Polster (13, 49, 83) aus Schaumstoff besitzt,
— durch das genannte Textilmaterial, das aus zur Erzeugung von Reibungselektrizität geeigneten, unhygroskopischen Fasern aus Kunststoff besteht und 50 bis 125 Maschen pro cm² besitzt,
— und durch eine mit Innen- und Aussenwand verbundene Schaumstoffplatte als Polster (13, 49, 83) mit offenen und luftdurchlässigen Poren.

2. Schutzhülle nach Anspruch 1, gekennzeichnet durch eine doppelte Lage des Textils auf der Innen- und Aussenseite.

3. Schutzhülle nach Anspruch 1 oder 2, dadurch gekennzeichnet, daß das Textilmaterial (17, 44) durchgehend ist und die Polsterung (13, 49, 83) vollständig einhüllt.

4. Schutzhülle nach einem der Ansprüche 1 bis 3, gekennzeichnet durch eine Ausbildung als Fusshülle (10, 10') zur Umhüllung des Vorder- und Hinterbeins unterhalb des Fusswurzelgelenks (6) bzw. Sprunggelenks (8), welche Fusshülle (10, 10') ausgebreitet eine rechteckige Form aufweist, deren Höhe h dem Abstand von Fessel (3) bis zum Fusswurzelgelenk (6) bzw. Sprunggelenk (8) angepasst ist und die einen Ueberschuss an Breite aufweist und in einen Anlagebereich (14) und Einrollbereich (15) unterteilt ist, welcher Einrollbereich (15) im angelegten Zustand unter dem Aussenrand (18) des Anlagebereichs (14) gelegen ist, wobei die hierbei gebildete Röhre innenseitig ausschliesslich durch das Textil (17) ausgebildet ist.

5. Schutzhülle nach Anspruch 4, dadurch gekennzeichnet, dass der Einrollbereich (15) durch parallele Rundwülste (16) strukturiert ist, die Bänder (21) auf der Aussenseite (11) befestigt sind und über den Aussenrand (18) und vertikal zu diesem herausragen.

6. Schutzhülle nach Anspruch 5, dadurch gekennzeichnet, dass mindestens innerhalb einiger Rundwülste (16) ein Stab (19) aus elastischem Material angeordnet ist.

7. Schutzhülle nach Anspruch 5, gekennzeichnet durch einen selbstklebenden Trenn- und Haftverschluss (22, 23) zwischen der Innenseite (12) entlang dem Aussrenrand (18) und dem Einrollbereich (15) auf der Aussenseite (11).

8. Schutzhülle nach Anspruch 7, dadurch gekennzeichnet, dass die Bänder (21) mit querliegenden Klebestreifen (20) auf der Aussenseite (11) einen weiteren Trenn- und Haftverschluss bilden.

9. Schutzhülle nach einem der Ansprüche 1 bis 3, gekennzeichnet durch eine Ausbildung als Gelenkhülle (30, 50) zur Umhüllung des Fusswurzelgelenks (6) bzw. Sprunggelenks (8), welche Gelenkhülle (30, 50) eine dem Abstand der Ansätze der Gelenke angepasste Höhe und eine den Gelenkumfang übertreffende Breite besitzt, einen gegenüber dem Unterrand (36, 56) längeren Oberrand (35, 55) aufweist, und in einen Anlagebereich (33, 53) und Einrollbereich (34, 54) unterteilt ist, wobei der Anlagebereich (33, 53) mit einer dachartigen, nach aussen gerichteten Wölbung (42, 62) versehen ist, deren Gratlinie vom Oberrand (35, 55) geneigt ansteigt, in der Mitte des Anlagebereichs (33, 53) eben verläuft und zum Unterrand (36, 56) hin abfällt (Fig. 4, 7).

10. Schutzhülle nach einem der Ansprüche 1 bis 3, gekennzeichnet durch eine Ausbildung als Fusshülle (75, 75') zur Umhüllung des Vorder- und des Hinterbeins von unterhalb des Fusswurzelgelenks (6) bzw. des Sprunggelenks (8) bis und mit der Hufkrone (1), welche Fusshülle (75, 75') ausgebreitet eine etwa trapezförmige Gestalt sowie eine abgerundete Unterkante aufweist und eine Breite besitzt, die etwa dem Umfang des Vorder- bzw. Hinterbeins entspricht, diese also ohne Ueberlappung mit der Fusshülle (75', 75') umkleidet werden können, wofür Befestigungsbänder (80) auf der Aussenseite (77) angebracht sind.

11. Schutzhülle nach Anspruch 1, gekennzeichnet durch eine abnehmbare Tasche (70) auf der dem Bein zugekehrten Innenseite zur Aufnahme eines Kissens.

## Claims

1. Sleeve-shaped protective covering for legs and joints of hoofed animals, particularly horses, provided with straps (21, 47, 68, 80) for the attachment of the protective covering to the relevant animals, characterised
— in that the protective covering (10, 10', 30, 50, 75, 75') is made as a therapeutic means for the treament of diseases of the covered parts by electrostatically produced charges acting on the skin,
— the protective covering being wrappable about legs and joints and its shape being stabilised and having an inner wall (12, 32, 52, 82) and outer wall (11, 31, 51, 77) of the same knitted textile material (17, 44) and between the two walls is provided a pad (13, 49, 83) of foam material,
— by the said textile material consisting of non-hygroscopic fibres suitable for producing triboelectricity and having 50 to 125 meshes per $cm^2$,
— and by a plate of foam material connected to the inner and outer wall as a pad (13, 49, 83) with open and air-permeable pores.

2. Covering according to Claim 1, characterised by a double layer of the textile on the inner and outer side.

3. Covering according to Claim 1 or 2, characterised in that the textile material (17, 44) is continuous and completely surrounds the padding (13, 49, 83).

4. Covering according to any one of Claims 1 to 3, characterised in that it is made as a leg covering (10, 10') for covering the forelegs and hind legs below the knee (6) or the hock (8) which leg covering (10, 10') when spread, has a rectangular shape the height h of which is adapted to the distance from the pastern (3) to the knee (6) or hock (8) and has a surplus width and is subdivided into an application portion (14) and wrapping portion (15), the wrapping portion (15) being positioned, when applied, below the outer edge (18) of the application portion (14), the tubes formed thereby being on the inner side formed only by the textile (17).

5. Covering according to Claim 4, characterised in that the structure of the wrapping portion (15) is formed by parallel round beads (16), and the straps (21) are attached at the outer side (11) and project vertically beyond the outer edge (18).

6. Covering according to Claim 5, characterised in that at least inside some of the round beads (16) is situated a rod (29) of elastic material.

7. Covering according to Claim 5, characterised by a self-adhesive separation and sticking closure means (22, 23) between the inner side (12) along the outer edge (18) and the wrapping portion (15) on the outer side (11).

8. Covering according to Claim 7, characterised in that the straps (21) with the transversely situated adhesive strips (20) on the outer side (11) form a further separation and sticking closure means.

9. Covering according to any one of Claims 1 to 3, characterised in that it is made as a joint cover (30, 50) for wrapping up a knee (6) or a hock (8), which joint cover (30, 50) has a height adapted to the distance between the beginnings of the joints and a width which exceeds the circumference of the joint, an upper edge (35, 55) which is longer than the lower edge (36, 56) and is subdivided into an application portion (33, 53) and a wrapping portion (34, 54), the application portion (33, 53) being provided with a roof-shaped, outwardly directed bulge (42, 62), the ridge of which rises obliquely from the upper edge (35, 55), is level in the middle of the application portion (33, 53) and drops to the lower edge (36, 56) — (Fig. 4, 7).

10. Covering according to any one of Claims 1 to 3, characterised in that it is made as a leg covering (75, 75') for wrapping the foreleg or hind leg from below the knee (6) or hock (8) to the coronet (1), which covering (75, 75'), when spread, has an approximately trapezial shape and a rounded lower edge and a width which corresponds approximately to the circumference of the foreleg or hind leg, so that these can be covered without overlapping with the leg covering (75, 75') for which purpose attachment straps (80) are provided on the outer side (77).

11. Covering according to Claim 1, characterised by a removable pocket (70) on the inside facing the leg, which serves to accommodate a cushion.

## Revendications

1. Enveloppe protectrice ou manchette pour les jambes et les jointures d'ongulés, en particulier de chevaux, munie de bandes (21, 47, 68, 80) pour fixer l'enveloppe sur les animaux concernés, caractérisée
— par la constitution de cette enveloppe protectrice (10, 10', 30, 50, 75, 75') pour réaliser un moyen thérapeutique pour traiter des maladies à l'endroit enveloppé au moyen de charges déclenchées électrostatiquement sur la peau,

— laquelle enveloppe protectrice peut être disposée autour de la jambe et de la jointure et conserver ensuite sa forme, comprend une paroi intérieure (12, 32, 52, 82) et une paroi extérieure (11, 31, 51, 77) constituées par le même matériau textile tricoté (77, 44) et est garnie entre les deux parois d'un rembourrage (13, 49, 83) en matière mousse,

— par un matériau textile constitué par des fibres synthétiques non hygroscopiques et convenant à la formation de triboélectricité et comprenant de 50 à 150 mailles au cm², 

— et par une plaque en mousse reliée à la paroi intérieure et à la paroi extérieure et constituant un rembourrage (13, 49, 93) à pores ouverts et perméable à l'air.

2. Enveloppe protectrice selon la revendication 1, caractérisée par une double couche du textile sur le côté intérieur et sur le côté extérieur.

3. Enveloppe protectrice selon la revendication 1 ou 2, caractérisée en ce que le matériau textile (17, 44) est continu et entoure complètement le rembourrage (13, 49, 83).

4. Enveloppe protectrice selon l'une des revendications 1 à 3, caractérisée par une forme donnée à l'enveloppe de jambe (10, 10') pour entourer la jambe antérieure et la jambe postérieure au-dessous de la jointure (6) du genou ou de la jointure (8) du jarret, laquelle enveloppe de jambe (10, 10') présente à l'état étalé une forme rectangulaire dont la hauteur « h » est adaptée à la distance séparant le paturon (3) de la jointure (6) du genou et de la jointure (8) du jarret et comprend un excès de largeur et est subdivisée en une région d'application (14) et une région d'enroulement (15), laquelle région d'enroulement (15), à l'état appliqué, se dispose sous le rebord extérieur (18) de la région d'application (14), les éléments tubulaires ainsi constitués étant exclusivement formés à l'intérieur par le textile (17).

5. Enveloppe protectrice selon la revendication 4, caractérisée en ce que la région d'enroulement (15) est structurée par des bourrelets arrondis et parallèles (16), les bandes (21) étant fixées sur le côté extérieur (11) et faisant saillie verticalement par rapport à ce dernier au-delà du rebord extérieur (18).

6. Enveloppe protectrice selon la revendication 5, caractérisée en ce qu'une barre (29) en matériau élastique est disposée à l'intérieur d'au moins un bourrelet rond (16).

7. Enveloppe protectrice selon la revendication 5, caractérisée par une fermeture auto-adhésive (22, 33) pouvant être ouverte et fermée, entre le côté intérieur (12) le long du côté du bord extérieur (18) et la région d'enroulement (15) sur le côté extérieur (11).

8. Enveloppe protectrice selon la revendication 7, caractérisée en ce que les bandes (21) forment avec les bandes adhésives (21) disposées transversalement sur le côté extérieur (10) une autre fermeture pouvant être ouverte ou fermée.

9. Enveloppe protectrice selon l'une des revendications 1 à 3, caractérisée en ce qu'elle est constituée sour forme d'une enveloppe de jointure (30, 50) pour entourer la jointure (6) du genou ou la jointure (8) du jarret, laquelle enveloppe de jointure (30, 50) présente une hauteur adaptée à la distance entre les prolongements de la jointure et une largeur dépassant les dimensions de la jointure, comprend un bord (35, 55) qui est plus long que le bord inférieur (36, 56), et est subdivisée en une région d'application (33, 53) et une région d'enroulement (34, 54), la région d'application (33, 53) étant munie d'un bombement (42, 62) en forme de toit et dirigé vers l'extérieur, dont la ligne de crête va en montant de façon inclinée à partir du bord supérieur (35, 55), est de forme continue au milieu de la région d'application (33, 54) et va en tombant en direction du bord inférieur (36, 56) (figures 4, 7).

10. Enveloppe protectrice selon l'une des revendications 1 à 3, caractérisée en ce qu'elle est constituée sous forme d'une enveloppe de jambe (75, 75') pour entourer la jambe antérieure et la jambe postérieure depuis le dessous de la jointure (6) du genou ou la jointure (8) du jarret jusqu'à la couronne (1) du sabot, y compris cette dernière, laquelle enveloppe de jambe (75, 75') présente à l'état étalé une forme sensiblement trapézoïdale et comprend également un bord inférieur arrondi et une largeur correspondant sensiblement à la dimension de la jambe antérieure ou de la jambe postérieure, ces dernières pouvant être revêtues sans chevauchement par l'enveloppe de jambe (75, 75'), raison pour laquelle des bandes de fixation (80) sont montées sur le côté extérieur (77).

11. Enveloppe protectrice selon la revendication 1, caractérisée en ce qu'elle comprend une poche amovible (70) sur le côté intérieur tourné vers la jambe et destinée à la réception d'un coussin.

FIG. 1

FIG. 2a

FIG. 2b

FIG. 3

FIG. 4a

FIG. 4b

0 059 917

FIG.5a

FIG.5b

FIG.6

FIG.7

3

FIG. 8a

FIG. 8b

FIG. 9a

FIG. 9b

FIG. 10

FIG. 11

5